# EUROPEAN PATENT APPLICATION

(11) **EP 4 793 320 A1**
(43) Date of publication of application: **19.08.2026**
(21) Application number: 24877189.1
(22) Date of filing: 09.10.2024
(51) Int. Cl.: C08L 71/10, C08L 83/04, F16H 55/06

(54) **RESIN COMPOSITION AND GEAR**

(30) Priority: 10.10.2023 JP 2023175063
(71) Applicant: Polyplastics-Evonik Corporation, Tokyo, 163-0913 (JP)
(72) Inventor: AKASHI, Tatsuki, Tokyo 163-0913 (JP); IGUCHI, Hirofumi, Tokyo 163-0913 (JP)
(74) Representative: Grünecker Patent- und Rechtsanwälte PartG mbB
(86) International application number: PCT/JP2024/036062
(87) International publication number: WO 2025/079594

(57) **Abstract**

Provided is a resin composition containing a polyaryl ketone, wherein the resin composition contains a polysiloxane, the polysiloxane contains a structure represented by formula (1), a peak corresponding to a cyclic siloxane is detected in pyrolysis GC/MS of the resin composition, and the content ratio of the polysiloxane in the resin composition is 0.25-1.25 mass%. (In formula (1), R1 and R2 each independently represent a C1-3 alkyl group.)

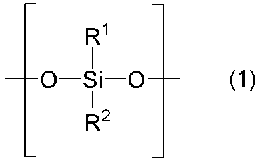

## Description

### Technical Field

The present disclosure relates to a resin composition and a gear.

### Background Art

As precision molded products such as gears widely used in the fields of, for example, automobiles and industrial machines, precision molded products made of metal and precision molded products made of resin are included. Among them, precision molded products made of resin have properties such as light weight, corrosion resistance, and low noise. Therefore, such products made of resin are expected to be used in the above fields.

For example, Patent Document 1 discloses a composition for a resin-made gear, the composition containing two or more polyether ether ketone resins having different melt viscosity, a fluororesin-based solid lubricant, and an aramid fiber.

### Citation List

### Patent Document

Patent Document 1: JP 2021-134225 A

### Summary of Invention

### Technical Problem

However, the present inventors have recognized that, when a resin precision molded product is formed using a resin composition containing polytetrafluoroethylene, which is the fluororesin-based solid lubricant of Patent Document 1, the resin precision molded product may be deformed during molding.

In addition, precision molded products with less appearance defects are required in precision molded products.

An object of the present disclosure is to provide a resin composition capable of reducing deformation of a precision molded product during molding and reducing an appearance defect of the precision molded product.

### Solution to Problem

The present disclosure relates to the following.
[1] A resin composition comprising a polyaryl ketone, wherein
   the resin composition contains a polysiloxane,
   the polysiloxane includes a structure represented by Formula (1),
   a peak corresponding to a cyclic siloxane is detected in pyrolysis GC/MS of the resin composition, and
   a content ratio of the polysiloxane in the resin composition is from 0.25 to 1.25 mass%: 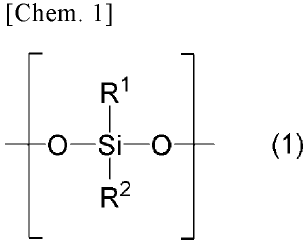
   where R¹ and R² each independently represent an alkyl group having carbon number of 1 to 3.
[2] The resin composition according to [1], wherein the content ratio of the polysiloxane in the resin composition is from 0.30 to 1.00 mass%.
[3] The resin composition according to [1] or [2], wherein the polyaryl ketone is polyether ether ketone.
[4] The resin composition according to any one of [1] to [3], wherein a melt viscosity of the polyaryl ketone at a temperature of 400°C and a shear rate of 1216 [1/sec] is from 150 to 650 Pa·sec.
[5] The resin composition according to any one of [1] to [4], wherein a melt viscosity of the resin composition at a temperature of 400°C and a shear rate of 1216 [1/sec] is from 380 to 510 Pa·sec.
[6] The resin composition according to any one of [1] to [5], wherein a number-average molecular weight of the polysiloxane is from 10000 to 10000000.
[7] The resin composition according to any one of [1] to [6], wherein a viscosity of the polysiloxane is from 1 to 10000 Pa·sec.
[8] A gear as a molded product of the resin composition according to any one of [1] to [7].

### Advantageous Effects of Invention

According to the present disclosure, a resin composition capable of reducing deformation of a precision molded product during molding and reducing an appearance defect of the precision molded product is provided. In addition, a gear as a molded product of the resin composition of the present disclosure is provided.

### Brief Description of Drawings

FIG. 1 is an explanatory figure illustrating the results of pyrolysis GC/MS of resin compositions.
FIG. 2 is an explanatory figure showing the evaluation of the deformation amount during molding.
FIG. 3 is an explanatory figure showing the evaluation of the deformation amount during molding.

### Description of Embodiments

The present disclosure will be described below with reference to specific embodiments. Note that, in the present specification, when a lower limit value and an upper limit value of a numerical range are separately indicated, the numerical range can be a combination of any of the lower limit value and any of the upper limit value.

As described above, according to studies by the present inventors, when a gear, which is a precision molded product, is molded using a resin composition containing a polytetrafluoroethylene (PTFE) and a polyaryl ketone, the gear may be deformed during molding. The present inventors have considered such deformation is caused because, for example, in the case of injection molding, the temperature of a mold during molding is high, and the molded product adheres to the mold. In the case of such a precision molded product, such deformation is more likely to occur because the contact area between the molded product and the mold is large.

As a result of further studies, it was found that using a resin composition containing a predetermined polysiloxane can reduce adhesion to the mold, and thus, reduce the deformation during molding. The reason is not clear, but the present inventors presume it as follows. That is, when the resin composition contains a polysiloxane having a predetermined structure, a cyclic siloxane such as hexamethylcyclotrisiloxane is generated on the surface of a molded product during molding, and the releasability and the slidability of the molded product from a mold are improved. As a result, it is possible to reduce the adhesion of the molded product to the mold and to reduce the deformation of the molded product during molding.

The resin composition contains a polyaryl ketone.

The polyaryl ketone is not particularly limited, and, for example, polyether ketone, polyether ether ketone (PEEK), polyether ketone ketone (PEKK), and polyether ketone ether ketone ketone (PEKEKK) can be used. In particular, polyether ether ketone is preferable.

A single type of polyaryl ketone may be used alone, or two or more types thereof may be used.

The melt viscosity of the polyaryl ketone at a temperature of 400°C and a shear rate of 1216 [1/sec] is preferably from 150 to 650 Pa·sec, more preferably from 200 to 650 Pa·sec, still more preferably from 350 to 650 Pa·sec, and particularly preferably from 450 to 650 Pa·sec. The melt viscosity can be measured using a method described later.

When the melt viscosity falls within the above range, the strength of a precision molded product formed from the resin composition is further improved. In addition, when the melt viscosity falls within the above range, the crystallization rate (solidification rate) of the polyaryl ketone is decreased. As a result, it becomes difficult to sufficiently cool the molded product when the molded product is obtained, and the molded product may easily adhere to the mold. Even in such a case, the resin composition of the present disclosure can have good releasability and reduce deformation of the molded product during molding.

The content ratio of the polyaryl ketone in the resin composition is not particularly limited, but is, for example, preferably from 80.00 to 99.75 mass%, more preferably from 85.00 to 99.50 mass%, and still more preferably from 90.00 to 99.00 mass%.

The resin composition contains a polysiloxane, and the polysiloxane includes a structure represented by Formula (1): 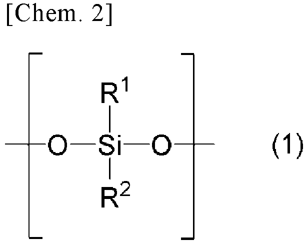 where, R¹ and R² each independently represent an alkyl group having carbon number of 1 to 3 (preferably from 1 to 2, and more preferably 1).

As described above, when the resin composition contains a polysiloxane having the structure represented by Formula (1), a cyclic siloxane is generated on the surface of the molded product during molding, and the releasability and slidability of the molded product from the mold are improved. As a result, it is possible to reduce the adhesion of the molded product to the mold and to reduce the deformation of the molded product during molding.

This is assumed to be due to the heat resistance of the structure represented by Formula (1).

Generally, the structural units of the polysiloxane include an M unit represented by R₃SiO_{1/2}, a D unit represented by R₂SiO_{2/2}, a T unit represented by RSiO_{3/2}, and a Q unit represented by SiO_{4/2} (R is an organic group, such as an alkyl group). Here, the structure represented by Formula (1) is a D unit.

When the polysiloxane contains the D unit, the D unit is thermally decomposed by heat during molding because the D unit has lower heat resistance than the Q unit and the T unit, and thus, a part of the polysiloxane is converted into a cyclic siloxane that contributes to the improvement of the releasability and the slidability. As a result, the releasability and the slidability of the molded product from the mold are improved.

When the Q unit or the T unit is contained as a main structural unit of polysiloxane, a three-dimensional network structure is formed, and thus, the polysiloxane has excellent heat resistance. Therefore, such a polysiloxane is less likely to be thermally decomposed by heat during molding. As a result, the cyclic siloxane is not sufficiently generated, and the releasability and the slidability of the molded product from the mold are not improved.

The fact that the resin composition contains the polysiloxane having the structure represented by Formula (1) can be confirmed by pyrolysis GC/MS. As described above, when the polysiloxane contains the D unit, a peak corresponding to the cyclic siloxane is detected during pyrolysis by pyrolysis GC/MS. When this peak is confirmed, it can be said that the resin composition contains a polysiloxane having the structure represented by Formula (1).

**In** other words, in the resin composition of the present disclosure, a peak corresponding to the cyclic siloxane is detected in the pyrolysis GC/MS of the resin composition. The cyclic siloxane is not particularly limited, and examples thereof include cyclic dimethylsiloxanes, and examples of the cyclic dimethylsiloxanes include a trimer such as hexamethylcyclotrisiloxane, a tetramer such as octamethylcyclotetrasiloxane, a pentamer such as decamethylcyclopentasiloxane, a hexamer such as dodecamethylcyclohexasiloxane, a heptamer such as tetradecamethylcycloheptasiloxane, and an octamer such as hexadecamethylcyclooctasiloxane. **In** addition, a low-molecular-weight cyclic siloxane such as 3- to 20-mer is preferred.

Examples of the peak corresponding to the cyclic siloxane include peaks at m/z 222, 296, 370, 444, 518, and 592. One of these peaks may be included or two or more thereof may be included in combination. The peak at m/z 222 corresponds to hexamethylcyclotrisiloxane, the peak at m/z 296 corresponds to octamethylcyclotetrasiloxane, the peak at m/z 370 corresponds to decamethylcyclopentasiloxane, the peak at m/z 444 corresponds to dodecamethylcyclohexasiloxane, the peak at m/z 518 corresponds to tetradecamethylcycloheptasiloxane, and the peak at m/z 592 corresponds to hexadecamethylcyclooctasiloxane.

The number-average molecular weight of the polysiloxane is not particularly limited, but may be, for example, from 10000 to 10000000, and is preferably from 100000 to 10000000, more preferably from 1000000 to 10000000, and particularly preferably from 2000000 to 10000000. When the number-average molecular weight falls within the above range, the heat resistance of the structure represented by Formula (1) becomes more suitable, and thermal decomposition is likely to occur during molding.

The viscosity of the polysiloxane is not particularly limited, and may be, for example, from 1 to 10000 Pa·sec, and is preferably from 10 to 10000 Pa·sec, more preferably from 100 to 10000 Pa·sec, still more preferably from 1000 to 10000 Pa·sec, and particularly preferably from 2000 to 10000 Pa·sec. When the viscosity falls within the above range, the number-average molecular weight of the polysiloxane is likely to fall within the above range.

Examples of the method for incorporating the polysiloxane having the structure represented by Formula (1) into the resin composition include incorporating EverGlide (trade name) manufactured by Polymer Dynamix Inc., and GENIOPLAST (trade name) PELLET S manufactured by Wacker Asahikasei Silicone Co., Ltd. into the resin composition. In other words, the resin composition preferably contains one or more selected from the group consisting of EverGlide (trade name) and GENIOPLAST (trade name) PELLET S, and more preferably contains EverGlide (trade name). EverGlide (trade name) is preferably EverGlide (trade name) MB3225.

The form of the polysiloxane is not particularly limited, and examples thereof include a form that is solid at 23°C and 1 atm (hereinafter, such a polysiloxane is also simply referred to as a solid polysiloxane). By incorporating such a solid polysiloxane, the thermal decomposition of the D unit due to heat during molding more suitably occurs.

The content ratio of the polysiloxane in the resin composition is from 0.25 to 1.25 mass%. The content ratio is preferably from 0.30 to 1.00 mass%, and more preferably from 0.30 to 0.70 mass%. When the content ratio of the polysiloxane is less than 0.25 mass%, the cyclic siloxane is not sufficiently generated on the surface of the molded product during molding, and the releasability and the slidability of the molded product from the mold are less likely to be improved. When the content ratio of the polysiloxane exceeds 1.25 mass%, the molded product may have an appearance defect due to silver streaking. The reason why the silver streaking may occur when the content ratio of the polysiloxane exceeds 1.25 mass% is not clear, but it is considered that when the content ratio of the polysiloxane is too large, a part of the polysiloxane may cause, for example, thermal decomposition during molding, and thus, gas may be generated.

The content ratio of the polysiloxane in the resin composition can be measured by extracting the polysiloxane from the resin composition.

The melt viscosity of the resin composition at a temperature of 400°C and a shear rate of 1216 [1/sec] is preferably from 100 to 550 Pa·sec, more preferably from 150 to 550 Pa·sec, still more preferably from 250 to 550 Pa·sec, particularly preferably from 350 to 550 Pa·sec, and especially preferably from 380 to 510 Pa·sec. The melt viscosity can be measured using a method described later.

When the melt viscosity falls within the above range, the strength of a precision molded product formed from the resin composition is further improved. In addition, when the melt viscosity falls within the above range, the crystallization rate (solidification rate) of the polyaryl ketone in the resin composition is decreased. As a result, it becomes difficult to sufficiently cool the molded product when the molded product is obtained, and the molded product may easily adhere to the mold. Even in such a case, the resin composition of the present disclosure can have good releasability and reduce deformation of the molded product during molding.

In addition, when the melt viscosity is from 380 to 510 Pa·sec, deformation during molding of the precision molded product is easily reduced, and an appearance defect of the precision molded product is also easily reduced.

The resin composition may contain an additional additive. Examples of the additional additive include an inorganic filler, a light stabilizer, an ultraviolet absorber, an antistatic agent, and a pigment.

The method for producing the resin composition is not particularly limited, and the resin composition can be produced by, for example, mixing the above-described polyaryl ketone and the above-described polysiloxane in a container under heating. In other words, the method for producing the resin composition preferably includes heating and mixing the polyaryl ketone and the polysiloxane.

In addition, the resin composition can be produced by adopting a known method.

The resin composition of the present disclosure can be suitably used for precision molded products. In other words, the resin composition of the present disclosure can be said to be a resin composition for precision molded products, and specifically, a resin composition for gears.

The molded product of the resin composition can be a precision molded product. Specifically, the molded product of the resin composition can be used as a gear. By using the resin composition of the present disclosure, a molded product in which deformation is reduced and an appearance defect is reduced is obtained.

The method for producing the gear is not particularly limited, and the gear can be produced by molding the resin composition of the present disclosure by any molding method such as extrusion molding, injection molding, compression molding, and vacuum molding. In particular, injection molding is preferably used.

The shape of the gear is not particularly limited, but the module m can be from 1.0 to 12.0, for example. The number of teeth may be from 40 to 65. The face width may be from 5 to 15 mm. The pressure angle may be from 15 to 25°. The inner diameter φ of a mounting boss portion may be from 10.00 to 20.00 mm.

When the resin composition of the present disclosure is used, a gear having the above-described shapes is easily obtained.

Furthermore, examples of the molded product of the resin composition of the present disclosure include a worm gear, an impeller, a cam, a joint, a shaft, a bearing, a small screw, a bolt, a nut, a sliding component, a connector, a hanger for a trolley wire, a coil spring, a spiral spring, a snap button, a wire for binding of electrical devices, a wire mesh, a header material, a washer, a contact probe, a pressure gauge (Bourdon tube), a spring for an electronic/electric device, a switch, a relay, a lead frame, a diaphragm, a bellow, a fuse clip, a cable tie, and a bush.

Hereinafter, methods for measuring physical properties of the resin composition will be described.

### Method for Measuring Melt Viscosity of Polyaryl Ketone and Resin Composition

The melt viscosity of the polyaryl ketone and the resin composition is measured by the following procedure.

The melt viscosity of the polyaryl ketone and the resin composition is measured under the conditions of a temperature of 400°C and a shear rate of 1216 [1/s] in accordance with JIS K7199 (ISO 11443).

### Pyrolysis GC/MS of Resin Composition

The pyrolysis GC/MS of the resin composition is measured by the following procedure.

The resin composition is weighed out to 1 mg as a measurement material, and the weighed resin composition is subjected to pyrolysis under the following pyrolysis conditions, followed by GC/MS measurement under the following GC/MS conditions.

### Pyrolysis Conditions

Equipment: EGA/PY-3030D available from Frontier Laboratories Ltd.
Pyrolysis conditions: 400°C for 10 min
Interface: 320°C

### GC/MS Measurement Conditions

GC/MS: GCTOFMS available from JEOL Ltd./Agilent GC7890B
Inlet temperature: 320°C
Column: DB-5MS 30 m-0.25 mmI. D-0.25 µm
Carrier gas: He, 1 ml/min, constant flow
Oven: After being maintained at 40°C for 2 min, the temperature is increased to 300°C at 20°C/min (13 min)
Interface: 300°C
Split ratio: Split 50/1
MSD: EI/Scan, ion source: 230°C
m/z: from 10 to 800

Each of the configurations, a combination of the configurations, and the like in each embodiment are illustrative, and addition, omission, substitution, and an additional change of the configurations can be appropriately made without departing from the spirit of the present invention. The present disclosure is not limited by the embodiments and is limited only by the claims.

### Examples

Hereinafter, the present disclosure will be specifically described with reference to Examples. However, the present disclosure is not limited to Examples as described below.

### Example 1

In advance, 100 parts by mass of polyether ether ketone (manufactured by Polyplastics-Evonik Corporation, product name: VESTAKEEP (trade name) 5000G) and 1.2 parts by mass of EverGlide (trade name) MB3225 (manufactured by Polymer Dynamix Inc.) were dry-blended. The resultant was mixed at 380°C by a twin-screw extruder with L/D of 40 and L: 40 mm to yield a resin composition. MB3225 is a master batch in which the base resin is polyether ether ketone, and the content ratio of polysiloxane is 25 mass%.

The obtained resin composition was thermally melted and injection-molded, and thus, a gear was obtained. The physical properties of the gear were as follows: module m of 1.0, number of teeth of 54, face width of 10 mm, pressure angle of 20°, and inner diameter φ of a mounting boss portion of 13.25 mm. As a molding machine, Roboshot S 2000i-100B manufactured by Fanuc Corporation was used. The molding conditions were as follows: resin temperature: 400°C, mold temperature: 200°C, injection speed: 20 mm/sec, holding pressure: 120 MPa, holding time: 15 sec, cooling time: 40 sec, and ejector pin protrusion delay during mold opening: 30 sec. The obtained gear was evaluated as follows.

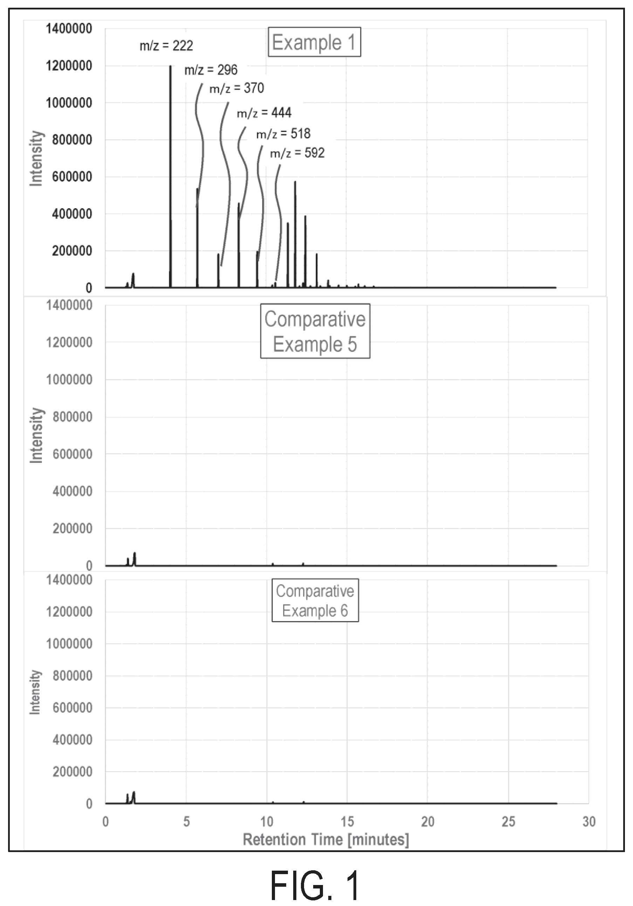

In addition, the results of pyrolysis GC/MS performed on the resin composition by the above method are shown in FIG. 1. As shown in FIG. 1, peaks corresponding to cyclic siloxane were confirmed.

Furthermore, the melt viscosity of the resin composition was measured by the above method and found to be 500 Pa·sec.

### Evaluation of Ejector Load

At the time of injection molding of the gear, the ejector load during ejection from the mold was measured from the screen of the ejector load in the molding machine. The minimum value (%) was read from the waveform during ejector operation, and the absolute value thereof was used as the value of the ejector load. A small ejector load indicates that the gear has excellent releasability and slidability from the mold.

### Evaluation of Deformation Amount during Molding

The deformation amount during molding was evaluated using a one-shot 3D Measurement System VR-3200 manufactured by Keyence Corporation.

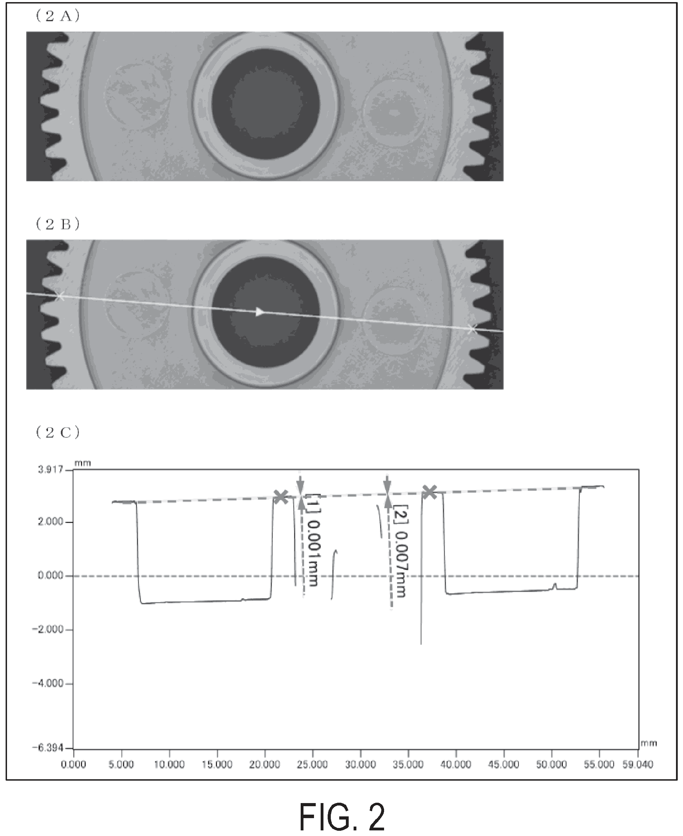

The gear was placed with the projecting surface facing upward. In an observation application, images were captured while the web portion is focused and the stitching measurement was performed, so that the entire length (diameter) of the gear could be imaged (FIG. 2A).

In an analysis application, a straight profile line was set in the profile measurement window using the profile tool to include the center of the gear (FIG. 2B). Then, a reference line was drawn on the web portion in the "line-point" measurement mode from the "measurement tool". Next, the parts of the boss portions represented by x in FIG. 2C were set as points, and the two distances between the reference line and each of the points (i.e., the distances between the reference line and each of the parts of the boss portion) were measured (the x parts in FIG. 2C). The average value [mm] of the two distances was rounded off to the first decimal place, and the calculated value was defined as the deformation amount during molding.

### Appearance Evaluation of Gear

The appearance of the gear was evaluated by visual observation. The evaluation criteria were as follows. Here, silver streaking is a phenomenon in which gas or air appears on the surface of the molded product, and the presence or absence of the silver streaking in the web portion of the molded product was confirmed.
A: No silver streaking is visually observed.
B: Silver streaking is visually observed.

### Examples 2 and 3

Resin compositions and gears were obtained in the same manner as in Example 1 except that the added amounts of EverGlide (trade name) were changed, and the content ratios of the polysiloxane in the resin compositions were changed to the values shown in Table 1. The evaluation results are shown in Table 1. Here, when the resin compositions according to Examples 2 and 3 were also subjected to pyrolysis GC/MS, peaks corresponding to cyclic siloxane were confirmed as in Example 1.

### Comparative Examples 1 to 7

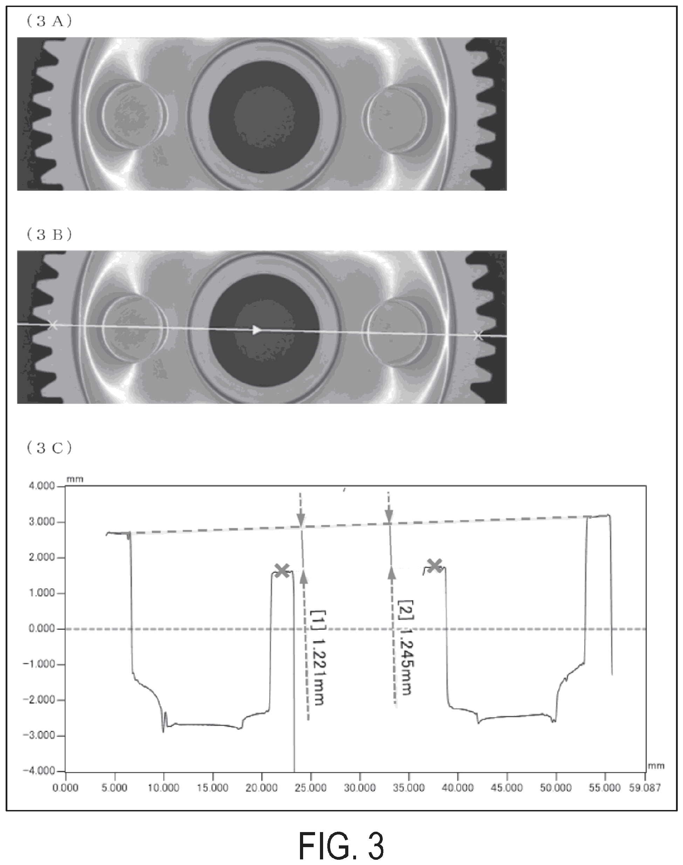

Resin compositions and gears were obtained in the same manner as in Example 1 except that the type of polyether ether ketone and the type of the additive were changed to those shown in Table 1, and the content ratios of the polysiloxane in the resin compositions were changed to the values shown in Table 1. The evaluation results are shown in Table 1. The deformation amount of the gear according to Comparative Example 1 during molding was evaluated in the same manner as in Example 1, and the results are shown in FIG. 3. FIG. 3A shows a captured image and corresponds to FIG. 2A. FIG. 3B shows the set straight profile line and corresponds to FIG. 2B. FIG. 3C shows measurement of two distances between the reference line and each of the points, and corresponds to FIG. 2C. As can be seen from FIG. 3, in Comparative Example 1, the gear was deformed during molding.

Also, in Comparative Examples 2, 3, and 5 to 7 using the same polyether ether ketone as that in Example 1, the deformation of the gear occurred during molding as in Comparative Example 1.

In addition, the results of pyrolysis GC/MS performed on the resin composition according to Comparative Example 5 and the resin composition according to Comparative Example 6 are shown in FIG. 1. As shown in FIG. 1, no peak corresponding to cyclic siloxane was observed. Similar results were obtained for Comparative Examples 1, 2, and 7.

### [Table 1]

**Table 1**

| | | Comparative Example 1 | Comparative Example 2 | Comparative Example 3 | Example 1 | Example 2 | Example 3 | Comparative Example 4 | Comparative Example 5 | Comparative Example 6 | Comparative Example 7 |
|---|---|---|---|---|---|---|---|---|---|---|---|
| Material | PEEK | L4000G | 5000G | 5000G | 5000G | 5000G | 5000G | 5000G | 5000G | 5000G | 5000G |
| | Additive | - | - | E.G. | E.G. | E.G. | E.G. | E.G. | PTFE micropowder | Silicone resin powder 1 | Silicone resin powder 2 |
| | Added amount [mass%] | 0 | 0 | 0.20 | 0.30 | 0.50 | 1.00 | 2.00 | 1.00 | 1.00 | 1.00 |
| Melt viscosity of resin composition [Pa·sec] | | 400 | 600 | 520 | 500 | 460 | 400 | 360 | 580 | 580 | 580 |
| Ejector load [%] | | 16 | 15 | 9 | 5 | 5 | 6 | 6 | 13 | 16 | 16 |
| Presence or absence of peak corresponding to cyclic siloxane | | None | None | Present | Present | Present | Present | Present | None | None | None |
| Evaluation results | Deformation amount [mm] | 1.2 | 1.5 | 0.3 | 0 | 0 | 0 | 0 | 0.8 | 1.5 | 1.2 |
| | Appearance evaluation | A | A | A | A | A | A | B | A | A | A |

In Table 1, L4000G represents VESTAKEEP (trade name) L4000G manufactured by Polyplastics-Evonik Corporation, 5000G represents VESTAKEEP (trade name) 5000G manufactured by Polyplastics-Evonik Corporation, E. G. represents EverGlide (trade name) MB3225, PTFE micropowder represents Dionin PTFE micropowder TF9205 manufactured by 3M Company, silicone resin powder 1 represents silicone resin powder KMP-590 manufactured by Shin-Etsu Chemical Co., Ltd., and silicone resin powder 2 represents silicone resin powder X-52-854 manufactured by Shin-Etsu Chemical Co., Ltd. In addition, regarding the added amount of the additive, when the additive was MB3225, MB3225 was added such that the added amounts of polysiloxane contained in MB3225 were the values shown in Table 1. In the case of the other additives, the amounts shown in Table 1 were added.

### Industrial Applicability

According to the present disclosure, a resin composition capable of reducing deformation of a precision molded product during molding and reducing an appearance defect of the precision molded product can be provided. In addition, a gear, which is a molded product of the resin composition of the present disclosure, can be provided.

## Claims

1. A resin composition comprising a polyaryl ketone, wherein
the resin composition contains a polysiloxane,
the polysiloxane includes a structure represented by Formula (1),
a peak corresponding to a cyclic siloxane is detected in pyrolysis GC/MS of the resin composition, and
a content ratio of the polysiloxane in the resin composition is from 0.25 to 1.25 mass%: 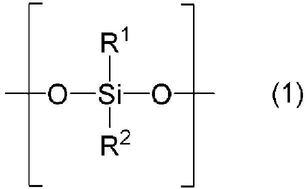
where R¹ and R² each independently represent an alkyl group having carbon number of 1 to 3.

2. The resin composition according to claim 1, wherein the content ratio of the polysiloxane in the resin composition is from 0.30 to 1.00 mass%.

3. The resin composition according to claim 1 or 2, wherein the polyaryl ketone is polyether ether ketone.

4. The resin composition according to any one of claims 1 to 3, wherein a melt viscosity of the polyaryl ketone at a temperature of 400°C and a shear rate of 1216 [1/sec] is from 150 to 650 Pa·sec.

5. The resin composition according to any one of claims 1 to 4, wherein a melt viscosity of the resin composition at a temperature of 400°C and a shear rate of 1216 [1/sec] is from 380 to 510 Pa·sec.

6. The resin composition according to any one of claims 1 to 5, wherein a number-average molecular weight of the polysiloxane is from 10000 to 10000000.

7. The resin composition according to any one of claims 1 to 6, wherein a viscosity of the polysiloxane is from 1 to 10000 Pa·sec.

8. A gear as a molded product of the resin composition according to any one of claims 1 to 7.
